# EUROPEAN PATENT APPLICATION

(11) **EP 4 748 976 A1**
(43) Date of publication of application: **27.05.2026**
(21) Application number: 24853813.4
(22) Date of filing: 14.08.2024
(51) Int. Cl.: C25B 9/70

(54) **SOEC MODULE AND SOEC WATER ELECTROLYSIS HYDROGEN PRODUCTION DEVICE BASED ON MULTI-STACK-CORE MODULE**

(30) Priority: 16.08.2023 CN 202311031308
(71) Applicant: China Petroleum & Chemical Corporation, Beijing 100728 (CN); Sinopec Dalian Research Institute of Petroleum and Petrochemicals Co., Ltd., Lushunkou District Dalian, Liaoning 116045 (CN)
(72) Inventor: ZHANG, Wei, Dalian, Liaoning 116045 (CN); YANG, Yan, Dalian, Liaoning 116045 (CN); WANG, Hongtao, Dalian, Liaoning 116045 (CN); JIANG, Rui, Dalian, Liaoning 116045 (CN); SUN, Zhaosong, Dalian, Liaoning 116045 (CN)
(74) Representative: Hoffmann Eitle
(86) International application number: PCT/CN2024/112070
(87) International publication number: WO 2025/036406

(57) **Abstract**

An SOEC module and an SOEC water electrolysis hydrogen production device based on a multi-stack-core module. Said device comprises a steam generator, a mixer, an air heater and a plurality of SOEC modules; each SOEC module comprises a heat preservation shell provided with a hot air module inlet, a hydrogen-containing mixed steam module inlet, an oxygen-rich air module outlet and a product crude hydrogen module outlet, and a plurality of electrolytic cell stack cores arranged in the heat preservation shell; and each electrolytic cell stack core comprises a hot air single-stack inlet, a hydrogen-containing mixed steam single-stack inlet, an oxygen-rich air single-stack outlet and a product crude hydrogen single-stack outlet.

## Description

### Cross Reference to Related Applications

The present application claims the benefits of Chinese Patent Application No. 202311031308.8 filed on Aug. 16, 2023, the content of which is incorporated herein by reference.

### Field

The present disclosure relates to the technical field of hydrogen production by water electrolysis, in particular to an SOEC module and an SOEC hydrogen generation device based on a multi-stack-core module.

### Background

There are three main ways to produce hydrogen by water electrolysis with renewable energy sources: alkaline water electrolysis, proton exchange membrane water electrolysis, and solid oxide electrolysis cell (SOEC).

SOEC will be the mainstream technology of water electrolysis for hydrogen production in the future, because it has a higher electrolysis efficiency (90% or above), can be integrated with existing petrochemical installations and make efficient use of the rich waste heat from the petrochemical installations, reduce the power consumption of SOEC installations, and improve the overall efficiency of the system.

In the prior art, the skid-mounted configuration of an SOEC hydrogen generation device based on a multi-stack-core module is generally as follows: an SOEC - stack core and a corresponding heater form a single stack, a plurality of single stacks form an SOEC module, and then a plurality of SOEC modules form an SOEC hydrogen generation device; wherein each SOEC stack core is arranged in a corresponding electric heater, so that the SOEC stack core can be heated to a desired temperature by means of the electric heater.

Through researches, the inventors have found that the skid-mounted configuration of an SOEC hydrogen generation device based on a multi-stack-core module in the prior art still has at least the following defect:
The operating stability of the SOEC hydrogen generation device may be affected because the high-temperature heating element of the electric heater may be damaged easily since the heating element is always in a high temperature state without enough cooling.

The information disclosed in this section is only intended to make the background of the present disclosure understood better, and may not be deemed as acknowledging or implying in any form that the information constitutes the prior art well known to those having ordinary skills in the art.

### Summary

The object of the present disclosure is to improve the stability of operation of SOEC hydrogen generation equipment.

The present disclosure provides an SOEC hydrogen generation device based on a multi-stack-core module. The device comprises:
a skid-mounted cabinet provided with a deionized ultra-pure water inlet, a cathode-protection hydrogen inlet, a cold air inlet, a crude hydrogen outlet and an oxygen-rich air outlet, and a steam generator, a mixer, an air heater and a plurality of SOEC modules disposed in the skid-mounted cabinet;
each SOEC module comprises a heat preservation shell provided with a hot air module inlet, a hydrogen-containing mixed steam module inlet, an oxygen-rich air module outlet and a crude hydrogen module outlet, and a plurality of electrolysis cell stack cores arranged in the heat preservation shell; and each electrolysis cell stack core comprises a hot air single-stack inlet, a hydrogen-containing mixed steam single-stack inlet, an oxygen-rich air single-stack outlet and a crude hydrogen single-stack outlet.

The mixer is configured to mix cathode-protection hydrogen with steam generated by the steam generator into hydrogen-containing mixed steam; the hydrogen-containing mixed steam is conveyed to the hydrogen-containing mixed steam single-stack inlet of each electrolysis cell stack core through the hydrogen-containing mixed steam module inlet; the air heater is configured to heat the air from the cold air inlet into hot air; and the hot air is conveyed to the hot air single-stack inlet of each electrolysis cell stack core through the hot air module inlet.

Preferably, in an embodiment of the present disclosure, the device is further characterized in:
the oxygen-rich air generated by the electrolysis cell stack core is conveyed to the oxygen-rich air module outlet of the corresponding SOEC module through a pipe section via the oxygen-rich air single-stack outlet; the crude hydrogen generated by the electrolysis cell stack core is conveyed to the crude hydrogen module outlet of a corresponding SOEC module through a pipe section via the crude hydrogen single-stack outlet.

Preferably, in an embodiment of the present disclosure, the pipeline connection structure in the skid-mounted cabinet comprises:
a first pipe section provided with the steam generator, with an inlet end connected to the deionized ultra-pure water inlet and an outlet end connected to the inlet of the mixer;
a second pipe section with an inlet connected to the cathode-protection hydrogen inlet and an outlet connected to the inlet of the mixer;
a third pipe section provided with the electric steam heater, with an inlet end connected to the outlet of the mixer and an outlet end connected to the hydrogen-containing mixed steam module inlet of the first SOEC module among the SOEC modules;
the crude hydrogen module outlet of the first SOEC module is connected to the air inlet of the ejector; the air outlet of the ejector is connected to the hydrogen-containing mixed steam module inlet of each second SOEC module;
a fourth pipe section provided with the air heater, with an inlet end connected to the cold air inlet and an outlet end connected to the hot air module inlet of each SOEC module;
each oxygen-rich air module outlet is connected to the inlet end of a fifth pipe section respectively, and the outlet end of the fifth pipe section is connected to the oxygen-rich air outlet;

The crude hydrogen module outlet of each second SOEC module is connected to the inlet end of the sixth pipe section respectively, and the outlet end of the sixth pipe section is connected to the crude hydrogen outlet.

Preferably, in an embodiment of the present disclosure, the device further comprises a plurality of gas heat exchangers, which are respectively arranged at:
a contact point between the sixth pipe section and the first pipe section, a contact point between the sixth pipe section and the second pipe section, and a contact point between the fourth pipe section and the fifth pipe section.

Preferably, in an embodiment of the present disclosure, the sixth pipe section is further provided with bypasses, which are respectively arranged at:
two sides of the contact point between the sixth pipe section and the first pipe section, and two sides of the contact point between the sixth pipe section and the second pipe section.

Preferably, in an embodiment of the present disclosure, four SOEC modules are provided;
wherein one first SOEC module is provided, and three second SOEC modules are provided.

Preferably, in an embodiment of the present disclosure, the nozzle inlet of the ejector is connected to the third pipe section.

In another aspect of the present disclosure, an SOEC module for an SOEC hydrogen generation device is provided. The SOEC hydrogen generation device comprises the above-mentioned SOEC hydrogen generation device based on a multi-stack-core module, and the pipeline connection structure in the SOEC module comprises:
a seventh pipe section, with an inlet end connected to the hydrogen-containing mixed steam module inlet and an outlet end connected to each hydrogen-containing mixed steam single-stack inlet respectively;
the electrolysis cell stack cores are grouped into a plurality of groups, each group comprises a plurality of electrolytic cell stack cores connected in series sequentially, and the oxygen-rich air single-stack outlet of the first electrolysis cell stack core in the group is connected to the hot air single-stack inlet of the follow-up electrolysis cell stack core;
an eighth pipe section, with an inlet end connected to the hot air module inlet and an outlet end connected to the hot air single-stack inlet of the first electrolysis cell stack core in each group;
a ninth pipe section, with an outlet end connected to the oxygen-rich air module outlet and an inlet end connected to the oxygen-rich air single-stack outlet of the last electrolysis cell stack core in each group; and
a tenth pipe section, with an outlet end connected to the crude hydrogen module outlet and an inlet end connected to each crude hydrogen single-stack outlet respectively.

In yet another aspect of the present disclosure, another SOEC module for an SOEC hydrogen generation device is provided. The SOEC hydrogen generation device comprises the above-mentioned SOEC hydrogen generation device based on a multi-stack-core module, and the pipeline connection structure in the SOEC module comprises:
a seventh pipe section, with an inlet end connected to the hydrogen-containing mixed steam module inlet and an outlet end connected to each hydrogen-containing mixed steam single-stack inlet respectively;
an eighth pipe section, with an inlet end connected to the hot air module inlet and an outlet end connected to each hot air single-stack inlet respectively;
a ninth pipe section, with an inlet end connected to each oxygen-rich air single-stack outlet and an outlet end connected to the oxygen-rich air module outlet;
a tenth pipe section, with an inlet end connected to each crude hydrogen single-stack outlet respectively and an outlet end connected to the crude hydrogen module outlet.

Preferably, in an embodiment of the present disclosure, the device further comprises:
a spare bypass arranged between the hot air single-stack inlet and the oxygen-rich air single-stack outlet of the electrolysis cell stack core.

Preferably, in an embodiment of the present disclosure, 2-10 electrolysis cell stack cores are provided in each SOEC module, and every two electrolysis cell stack cores are grouped into a group.

Compared with the prior art, the present disclosure has the following beneficial effects:
According to the SOEC hydrogen generation device in the present disclosure, one air heater can simultaneously control the temperatures of the electrolysis cell stack cores in a plurality of SOEC modules through pipeline arrangement; since the plurality of electrolysis cell stack cores in the SOEC module in the present disclosure are densely arranged in the heat preservation shell, most of the thermal energy radiated from the electrolysis cell stack cores in the heat preservation shell is confined in the heat preservation shell, thereby the temperature of the working environment of the air heater can be effectively decreased, the service life of the electric heater can be effectively prolonged, and the probability of failure of the electric heater can be decreased; thus, the operating stability of the SOEC hydrogen generation device is improved.

In addition, in the present disclosure, since the plurality of electrolysis cell stack cores in the SOEC module are densely arranged in the heat preservation shell, the temperature in the heat preservation shell is the result of the combined effect of the thermal energy radiated from the electrolysis cell stack cores. Therefore, compared with a scheme in which each electrolysis cell stack core is heated separately, the present disclosure can effectively improve the stability of the working temperature of the electrolysis cell stack cores; thus, the operating stability of the SOEC hydrogen generation device is further improved.

The above description is only a summary of the technical scheme of the present disclosure. Hereunder one or more preferred embodiments will be presented and described with reference to the accompanying drawings in detail, in order to make the technical means of the present disclosure understood more clearly and implemented on the basis of the description, and make the above-mentioned and other objects, technical features and advantages of the present disclosure understood more easily.

### Brief Description of the Drawings

To explain the technical scheme of the present disclosure more clearly, the drawings to be used in the embodiments will be introduced below briefly. Obviously, the drawings used in the description below only illustrate some embodiments of the present disclosure, and those having ordinary skills in the art can work out other drawings based on these drawings without expending any creative labor.
Fig. 1 is a schematic structural diagram of the SOEC hydrogen generation device in the present disclosure;
Fig. 2 is a schematic structural diagram of the SOEC module in the present disclosure; and
Fig. 3 is another structural schematic diagram of the SOEC module in the present disclosure.

### Detailed Description

Some specific embodiments of the present disclosure will be detailed with reference to the accompanying drawings. However, it may be understood that the scope of protection of the present disclosure is not limited to those embodiments.

Unless otherwise expressly stated, throughout the specification and claims, the term "comprise" or "include" or their variants such as "comprising" or "including" shall be understood as including the enumerated elements or components, without excluding other elements or components.

In this document, the terms "first", "second", etc. are used to distinguish two different elements or parts, rather than to define a specific position or relative relationship. In other words, in some embodiments, the terms "first", "second", etc. may also be interchanged with each other.

### Embodiment 1

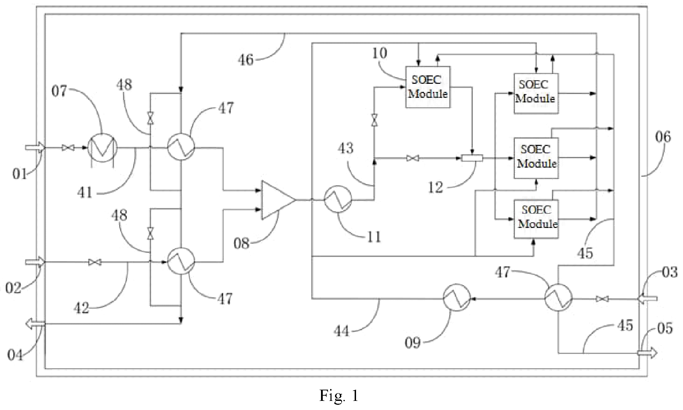

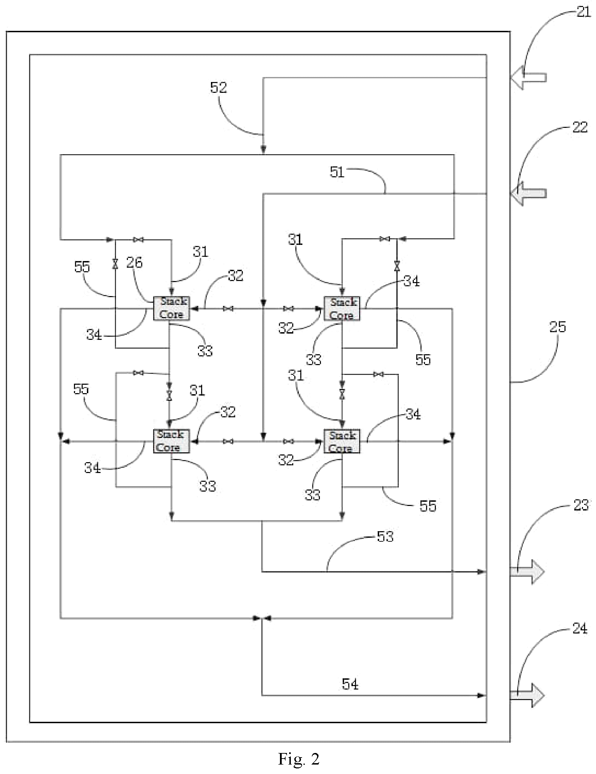

In order to improve the operating stability of an SOEC hydrogen generation device, as shown in Figs. 1 and 2, in an embodiment of the present disclosure, an SOEC hydrogen generation device based on a multi-stack-core module is provided. The device comprises:
a skid-mounted cabinet 06 provided with a deionized ultra-pure water inlet 01, a cathode-protection hydrogen inlet 02, a cold air inlet 03, a crude hydrogen outlet 04 and an oxygen-rich air outlet 05, and a steam generator 07, a mixer 08, an air heater 09 and a plurality of SOEC modules 10 disposed in the skid-mounted cabinet 06;
each SOEC module 10 comprises a heat preservation shell 25 provided with a hot air module inlet 21, a hydrogen-containing mixed steam module inlet 22, an oxygen-rich air module outlet 23 and a crude hydrogen module outlet 24, and a plurality of electrolysis cell stack cores 26 arranged in the heat preservation shell 25; and each electrolysis cell stack core 26 comprises a hot air single-stack inlet 31, a hydrogen-containing mixed steam single-stack inlet 32, an oxygen-rich air single-stack outlet 33 and a crude hydrogen single-stack outlet 34;
the mixer 08 is configured to mix cathode-protection hydrogen with steam generated by the steam generator 07 into hydrogen-containing mixed steam; the hydrogen-containing mixed steam is delivered to the hydrogen-containing mixed steam single-stack inlet 32 of each electrolysis cell stack core through the hydrogen-containing mixed steam module inlet 22; the air heater 09 is usually configured as an electric heater and is used to heat the air from the air inlet 03 into hot air; the hot air is delivered to the hot air single-stack inlet 31 of each electrolysis cell stack core through the hot air module inlet 21.

Water (e.g., deionized ultra-pure water) can be introduced into the skid-mounted cabinet 06 through the water inlet 01, and can be heated by the steam generator 07 to generate steam; cathode-protection hydrogen can be introduced into the skid-mounted cabinet 06 through the cathode-protection hydrogen inlet 02; the cathode-protection hydrogen and the steam are mixed by the mixer 08 to form hydrogen-containing mixed steam, which is then delivered to each SOEC module 10 through the hydrogen-containing mixed steam module inlet 22, so as to supply the hydrogen-containing mixed steam to the hydrogen-containing mixed steam single-stack inlet 32 of the electrolysis cell stack cores in the SOEC module 10.

Air is introduced into the skid-mounted cabinet 06 through the air inlet 03, and is heated by the air heater 09 into hot air, which is delivered to each SOEC module 10 through the hot air module inlet 21, so as to supply the hot air to the hot air single-stack inlet 31 of the electrolysis cell stack cores in the SOEC module 10.

In the present disclosure, each SOEC module 10 encloses a plurality of electrolysis cell stack cores 26 in a heat preservation space by means of its heat preservation shell 25, while the air heater 09 is arranged outside the heat preservation space. Thus, most of the thermal energy radiated from each electrolysis cell stack core is confined in the heat preservation shell and can be used by other electrolysis cell stack cores, and at the same time, the air heater 09 is allowed to work at a relatively low heating power, thereby the service life of the air heater 09 and the stability of the working temperature of the electrolysis cell stack cores are ensured.

The working principle of an embodiment of the present disclosure will be explained below in an example in which the skid-mounted cabinet includes four SOEC modules, and each SOEC module includes four electrolysis cell stack cores (referred to as stack cores in Fig. 2):
In the embodiment of the present disclosure, on one hand, deionized ultra-pure water is introduced into the skid-mounted cabinet 06 through the water inlet 01 and flows through the steam generator 07 (an electrically heating saturated steam generator), so that saturated steam is formed; on the other hand, cathode-protection hydrogen is introduced into the skid-mounted cabinet 06 through the cathode-protection hydrogen inlet 02 and is heated; then, the saturated steam and the cathode-protection hydrogen are mixed uniformly in the mixer 08. After the mixing, the hydrogen-containing mixed steam is delivered to the hydrogen-containing mixed steam single-stack inlet 32 of each electrolysis cell stack core through the hydrogen-containing mixed steam module inlet 22.

In addition, air is introduced into the skid-mounted cabinet 06 through the air inlet 03, is heated by the air heater 09 into hot air, and then the hot air is delivered to the hot air single-stack inlet 31 of each electrolysis cell stack core through the hot air module inlet 21. That is to say, in the embodiment of the present disclosure, an air heater 09 is provided for heating air, and the heated hot air is introduced into each heat-insulating shell 25 through a plurality of branch pipe sections, and then is further conveyed to the hot air single-stack inlet 31 of each electrolysis cell stack core 26 in the SOEC module 10 through the branch pipe sections.

In the embodiment of the present disclosure, a plurality of electrolysis cell stack cores in the SOEC module 10 are densely arranged in the heat preservation shell 25, and most of the thermal energy radiated from each electrolysis cell stack core is confined in the heat preservation shell 25, while the air heater 09 is arranged outside the heat preservation shell 25, thereby the effect of the high temperature radiation of the electrolysis cell stack cores on the ambient temperature can be effectively reduced.

It may be understood that the skid-mounted cabinet 06 is not indispensable for achieving the object of hydrogen production by water electrolysis and solving the problem of operating stability of the SOEC hydrogen generation device. In the embodiment of the present disclosure, with the arrangement of the skid-mounted cabinet 06, a plurality of functional components in the SOEC hydrogen generation device can be integrated and arranged together. Thus, the skid-mounted cabinet is beneficial to reducing the footprint of the device and facilitating the relocation of the entire device.

### Embodiment 2

On the basis of the Embodiment 1, in this embodiment of the present disclosure, the oxygen-rich air and crude hydrogen produced by each electrolysis cell stack core 26 can be configured as follows:
The oxygen-rich air produced by each electrolysis cell stack core 26 is delivered to the oxygen-rich air module outlet 23 of a corresponding SOEC module 10 through a pipe section via an oxygen-rich air single-stack outlet 33; the crude hydrogen produced by each electrolysis cell stack core 26 is delivered to the crude hydrogen module outlet 24 of a corresponding SOEC module 10 through a pipe section via a crude hydrogen single-stack outlet 34.

In this embodiment of the present disclosure, since the electrolysis cell stack cores do not require a separate heater, the plurality of electrolysis cell stack cores in the SOEC module can be densely arranged; since the electrolysis cell stack cores arranged in the heat preservation shell are very close to each other and the heat preservation shell has a heat preservation function, the ambient temperature in the heat preservation shell is a result of the combined effect of heat radiation of the electrolysis cell stack cores. Thus, compared with a scheme in which the electrolysis cell stack cores are heated separately in the prior art, this embodiment of the present disclosure can effectively improve the stability of the working temperature of the electrolysis cell stack cores.

In summary, according to the SOEC hydrogen generation device in this embodiment of the present disclosure, one air heater can simultaneously control the temperatures of the electrolysis cell stack cores in a plurality of SOEC modules through pipeline arrangement; since the plurality of electrolysis cell stack cores in the SOEC module in this embodiment of the present disclosure are densely arranged in the heat preservation shell, most of the thermal energy radiated from the electrolysis cell stack cores in the heat preservation shell is confined in the heat preservation shell, thereby the temperature of the working environment of the air heater can be effectively decreased, the service life of the electric heater can be effectively prolonged, and the probability of failure of the electric heater can be decreased; thus, the operating stability of the SOEC water electrolysis hydrogen production device is improved.

In addition, in this embodiment of the present disclosure, since the plurality of electrolysis cell stack cores in the SOEC module are densely arranged in the heat preservation shell, the temperature in the heat preservation shell is the result of the combined effect of the thermal energy radiated from the electrolysis cell stack cores. Therefore, compared with a scheme in which each electrolysis cell stack core is heated separately, this embodiment of the present disclosure can effectively improve the stability of the working temperature of the electrolysis cell stack cores; thus, the operating stability of the SOEC hydrogen generation device is further improved.

### Embodiment 3

On the basis of the Embodiment 1 and the Embodiment 2, as shown in Figs. 1 and 2, in this embodiment of the present disclosure, the pipeline connection structure in the skid-mounted cabinet of the SOEC hydrogen generation device is further described, specifically:
It may be noted that the pipeline connection structure in the skid-mounted cabinet in this embodiment of the present disclosure includes a plurality of pipe sections, and two ends of each pipe section are defined respectively according to the flow direction of the fluid (gas, liquid or gas-liquid mixture) in each pipe section in this embodiment of the present disclosure, wherein the end through which the fluid flows in is referred to as an inlet end, while the end through which the fluid flows out is referred to as an outlet end.

The first pipe section 41 is provided with a steam generator 07, the inlet end of the steam generator is connected to the water inlet 01, and the outlet end of the steam generator is connected to the inlet of the mixer 08; the inlet end of the second pipe section 42 is connected to the cathode-protection hydrogen inlet 02, and the outlet end of the second pipe section 42 is connected to the inlet of the mixer 08; the inlet end of the third pipe section 43 is connected to the outlet of the mixer 08, and the outlet end of the third pipe section 43 is connected to the hydrogen-containing mixed steam module inlet of the first SOEC module among the SOEC modules 10; preferably, the third pipe section 43 may further be provided with an electric steam heater 11.

Thus, deionized ultra-pure water is introduced into the skid-mounted cabinet 06 through the water inlet 01 and flows through the steam generator 07 on the first pipe section 41, so that saturated steam is formed; cathode-protection hydrogen is introduced into the second pipe section 42 inside the skid-mounted cabinet 06 through the cathode-protection hydrogen inlet 02 (preferably, the cathode-protection hydrogen can be heated in the second pipe section 42), and then the saturated steam and the cathode-protection hydrogen are introduced into the mixer 08 and mixed uniformly into hydrogen-containing mixed steam, which is then introduced into the third pipe section 43; the third pipe section 43 is provided with an electric steam heater 11; the heated hydrogen-containing mixed steam is delivered to the hydrogen-containing mixed steam single-stack inlet 32 of each electrolysis cell stack core through the hydrogen-containing mixed steam module inlet 22. The steam generator 07 in this embodiment of the present disclosure may be an electrically heating saturated steam generator or a saturated steam generator that employs an external heat source for heating.

The crude hydrogen module outlet of the first SOEC module is connected to the air inlet of an ejector 12; the air outlet of the ejector 12 is connected to the hydrogen-containing mixed steam module inlet of each second SOEC module; a jet nozzle of the ejector 12 is connected to the third pipe section 43; preferably, in this embodiment of the present disclosure, a nozzle inlet of the ejector 12 is connected to the third pipe section 43. Thus, the crude hydrogen produced by the first SOEC module and a part of the hydrogen-containing mixed steam are delivered to the hydrogen-containing mixed steam module inlet of each second SOEC module through the ejector 12. Thus, after the steam is decomposed in the first SOEC module, the produced crude hydrogen still carries some residual steam that has not been electrolyzed. By jetting the crude hydrogen into the second SOEC module to further electrolyze the residual steam, the hydrogen content in the crude hydrogen produced by the SOEC hydrogen generation device is improved.

It may be noted that in this embodiment of the present disclosure, the SOEC module 10 is divided into a first SOEC module and a second SOEC module, wherein the first SOEC module refers to an SOEC module that is directly connected to the hydrogen-containing mixed steam in the third pipe section 43; the second SOEC module refers to an SOEC module connected to the crude hydrogen produced by the first SOEC module, which is to say, the second SOEC module uses the crude hydrogen produced by the first SOEC module for further processing.

In this embodiment of the present disclosure, a plurality of SOEC modules 10 may be provided, and the SOEC modules 10 can be optimized and combined according to the actual situation, so that the hydrogen-containing mixed steam can be electrolyzed more fully; in actual applications, four SOEC modules 10 are preferably provided, wherein one first SOEC module is provided and three second SOEC modules are provided.

The inlet end of the fourth pipe section 44 provided with the air heater 09 is connected to the air inlet 03, and the outlet end of the fourth pipe section 44 is connected to the hot air module inlet 21 of each SOEC module 10 respectively. In this embodiment of the present disclosure, the air heater 09 is arranged outside the SOEC module 10 as a heating element for controlling a plurality of electrolysis cell stack cores 26, and the SOEC module 10 is provided with a heat insulation shell 25; thus, the heat radiation from the electrolysis cell stack cores 26 can't directly affect the air heater 09.

Each oxygen-rich air module outlet 23 is connected to the inlet end of a fifth pipe section 45 respectively, and the outlet end of the fifth pipe section 45 is connected to the oxygen-rich air outlet 05; the oxygen-rich air produced by each electrolysis cell stack core 26 in the SOEC module 10 is concentrated and externally connected through the oxygen-rich air module outlet 23; then, each oxygen-rich air module outlet 23 is connected to the fifth pipe section 45, and then concentrated and externally connected to the oxygen-rich air outlet 05 on the skid-mounted cabinet 06.

The crude hydrogen module outlet 24 of each second SOEC module is connected to the inlet end of the sixth pipe section 46 respectively, and the outlet end of the sixth pipe section 46 is connected to the crude hydrogen outlet 04. The crude hydrogen produced by each electrolysis cell stack core 26 in the second SOEC module is concentrated and externally connected through the crude hydrogen module outlet 24; then, each crude hydrogen module outlet 24 is connected to the sixth pipe section 46, and then concentrated and externally connected to the crude hydrogen outlet 04 on the skid-mounted cabinet 06.

Preferably, in this embodiment of the present disclosure, a plurality of gas heat exchangers 47 may further be provided, which are respectively arranged at the contact point between the sixth pipe section 46 and the first pipe section 41, the contact point between the sixth pipe section 46 and the second pipe section 42, and the contact point between the fourth pipe section 44 and the fifth pipe section 45.

Preferably, in this embodiment of the present disclosure, the sixth pipe section 46 is further provided with bypasses 48, and each bypass 48 is respectively arranged at two sides of the contact point between the sixth pipe section 46 and the first pipe section 41 and at two sides of the contact point between the sixth pipe section 46 and the second pipe section 42; thus, when the crude hydrogen in the sixth pipe section 46 fails at the position of a heat exchanger 47, the corresponding bypass 48 can also be used as a backup path to avoid affecting the normal operation of the device.

Preferably, in this embodiment of the present disclosure, four SOEC modules may be provided; wherein one first SOEC module is provided, and three second SOEC modules are provided.

### Embodiment 4

Based on the SOEC hydrogen generation device in any of the Embodiments 1-3, as shown in Fig. 2, the pipeline connection structure in the SOEC module 10 in this embodiment of the present disclosure may include:
a seventh pipe section 51, with an inlet end connected to the hydrogen-containing mixed steam module inlet 22 and an outlet end connected to each hydrogen-containing mixed steam single-stack inlet 32 respectively;
in this embodiment of the present disclosure, the electrolysis cell stack cores are grouped into a plurality of groups, each group comprises a plurality of electrolysis cell stack cores connected in series sequentially, and the oxygen-rich air single-stack outlet of the first electrolysis cell stack core in the group is connected to the hot air single-stack inlet of the follow-up electrolysis cell stack core; in this embodiment of the present disclosure, the SOEC module 10 includes four electrolysis cell stack cores, which are grouped into two groups, and each group includes two electrolysis cell stack cores;
an eighth pipe section 52, with an inlet end connected to the hot air module inlet 21 and an outlet end connected to the hot air single-stack inlet 31 of the first electrolysis cell stack core in each group;
a ninth pipe section 53, with an inlet end connected to the oxygen-rich air single-stack outlet 33 of the last electrolysis cell stack core in each group and an outlet end connected to the oxygen-rich air module outlet 23; and a tenth pipe section 54, with an inlet end connected to each crude hydrogen single-stack outlet 34 respectively and an outlet end connected to the crude hydrogen module outlet 24.

By connecting the electrolysis cell stack cores in each group in series sequentially, the oxygen-rich air discharged from the oxygen-rich air single-stack outlet of the first electrolysis cell stack core in the group can be introduced into the hot air single-stack inlet of the follow-up electrolysis cell stack core, so that the heat of the oxygen-rich air can be utilized in the latter electrolysis cell stack core, so as to further reduce the heating demand for the air heater 09 and improve energy utilization.

Preferably, in this embodiment of the present disclosure, a spare bypass 55 may be further provided between the hot air single-stack inlet 31 and the oxygen-rich air single-stack outlet 33 of each electrolysis cell stack core 26, so that when an electrolysis cell stack core 26 fails, the corresponding bypass 55 can be used as a backup path to avoid affecting the normal operation of the SOEC module.

In the prior art, an electric heater is usually used to heat an electric stack as follows: the electric stack is placed in the electric heater, and heat elements such as electric heating wires are arranged in the electric heater; the electric stack is heated to a desired temperature by heating with the heating wires. This heating scheme in the prior art mainly uses the heat radiation from an electric heating element to preheat the air in the heater and the stack, but it requires a long preheating time, and the electric heating element is always in a high temperature state; in the entire working process, the air in the heater is essentially in a static state, consequently, the heat transfer rate is low; in addition, the heating element is easy to be damaged since it is always in a high temperature state and can't be cooled effectively.

In this embodiment of the present disclosure, the air is heated outside the SOEC module, and then the hot air is introduced into each electrolysis cell stack core inside the SOEC module; since the hot air flows inside the electrolysis cell stack core, the electric stack can be heated up to a desired temperature quickly through convection, heat conduction and heat radiation, and the preheating time is short; in addition, in this embodiment of the present disclosure, since the heating element in the electric heater for heating the air is always in the flowing air in the heating process, the heating element is not easy to be damaged due to high-temperature heating.

In this embodiment of the present disclosure, an SOEC module is employed, a plurality of separate electrolysis cell stack cores can be compactly arranged in a cavity (a heat preservation shell), and the electrolysis cell stack cores can serve as heat sources for each other, and there is heat interaction among them, thus, a high-temperature atmosphere can be maintained easily in the cavity; besides, the heat preservation design can be easily realized by means of the SOEC module, as long as the heat preservation is implemented on the heat preservation shell. Since the shape of the heat preservation shell can be made regular, it is unnecessary to implement heat preservation for an irregular shape; therefore, this embodiment of the present disclosure can simplify the structures of the heat preservation components; moreover, since the heat preservation shell in this embodiment of the present disclosure is a hollow part, the weight of the cavity and the consumption of materials can be reduced, and a good thermal insulation effect can be achieved.

The electrolysis cell stack cores in this embodiment of the present disclosure can realize parallel connection or series connection of a plurality of electrolysis cell stack cores through mutual air supply, so that heat of the hot air can be utilized fully and reused, and the heat loss of the hot air can be reduced. Besides, with the compact arrangement in this embodiment of the present disclosure, the spacing between the electrolysis cell stack cores can be reduced, thereby optimal utilization of space and floor can be achieved.

In this embodiment of the present disclosure, the crude hydrogen of a previous stage of modules may be injected to the next stage of modules among the SOEC modules (i.e., the crude hydrogen of the first SOEC module is injected to the second SOEC module) through an ejector, so that cascaded utilization of a plurality of SOEC modules can be realized, thereby the reuse rate of steam can be improved, direct cooling of the crude hydrogen can be reduced, and direct utilization of the heat can be realized.

### Embodiment 5

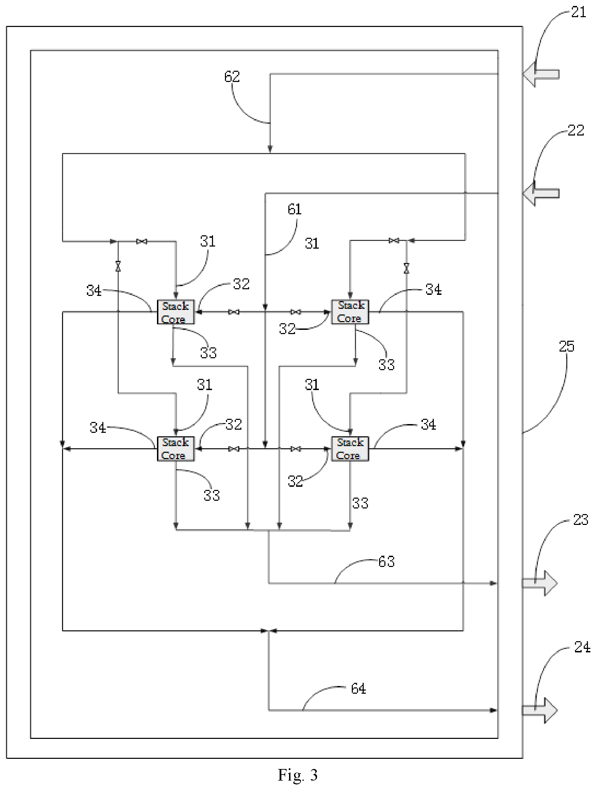

In this embodiment of the present disclosure, as shown in Fig. 3, the pipeline connection structure in the SOEC module 10 can also be configured as follows:
The inlet end of a seventh pipe section 61 is connected to the hydrogen-containing mixed steam module inlet 22, and outlet end of the seventh pipe section 61 is connected to each hydrogen-containing mixed steam single-stack inlet 32 respectively; the inlet end of an eighth pipe section 62 is connected to the hot air module inlet 21, and the outlet end of the eighth pipe section 62 is connected to each hot air single-stack inlet 31 respectively;
the inlet end of a ninth pipe section 63 is connected to each oxygen-rich air single-stack outlet 33 respectively, and the outlet end of the ninth pipe section 63 is connected to the oxygen-rich air module outlet 23; the inlet end of a tenth pipe section 64 is connected to each crude hydrogen single-stack outlet 34 respectively, and the outlet end of the tenth pipe section 64 is connected to the crude hydrogen module outlet 24.

The embodiments are disclosed and described above for the purpose of enabling those skilled in the art to implement or use the present application. It is obvious to those skilled in the art that various modifications can be made to those embodiments. The general principle defined herein may be implemented in other embodiments without departing from the spirit or scope of the present application. Therefore, the scope of the present application may not be limited to those embodiments illustrated herein, but may be comprehended as the broadest scope consistent with the principle and novel features disclosed herein.

## Claims

1. An SOEC hydrogen generation device based on a multi-stack-core module, comprising:
a steam generator for generating steam by heating water;
a mixer for mixing cathode-protection hydrogen with the steam generated by the steam generator into hydrogen-containing mixed steam;
an air heater for heating air to generate hot air;
an SOEC module comprising a heat preservation shell and a plurality of electrolysis cell stack cores arranged in the heat preservation shell, wherein the heat preservation shell is provided with a hot air module inlet, a hydrogen-containing mixed steam module inlet, an oxygen-rich air module outlet and a crude hydrogen module outlet;
wherein the hydrogen-containing mixed steam outputted by the mixer is supplied to a hydrogen-containing mixed steam single-stack inlet of each electrolysis cell stack core through the hydrogen-containing mixed steam module inlet, and the hot air generated by the air heater is supplied to a hot air single-stack inlet of each electrolysis cell stack core through the hot air module inlet, and the oxygen-rich air module outlet and the crude hydrogen module outlet are configured to discharge oxygen-rich air and crude hydrogen generated by each electrolysis cell stack core respectively.

2. The SOEC hydrogen generation device based on a multi-stack-core module of claim 1, further comprising a skid-mounted cabinet, wherein the steam generator, the mixer, the air heater and the SOEC module are respectively arranged in the skid-mounted cabinet, and the skid-mounted cabinet is provided with a water inlet for supplying the water to the steam generator, a cathode-protection hydrogen inlet for supplying the cathode-protection hydrogen to the mixer, an air inlet for supplying the air to the air heater, a crude hydrogen outlet in communication with the crude hydrogen module outlet, and an oxygen-rich air outlet in communication with the oxygen-rich air module outlet.

3. The SOEC hydrogen generation device based on a multi-stack-core module of claim 1 or 2, comprising a plurality of SOEC modules, wherein the plurality of SOEC modules comprise a first SOEC module and a plurality of second SOEC modules that are in communication via an ejector; the crude hydrogen module outlet of the first SOEC module is connected to an air inlet of the ejector; an air outlet of the ejector is connected to the hydrogen-containing mixed steam module inlet of each of the second SOEC modules; and the crude hydrogen module outlet of each of the second SOEC modules is in communication with the crude hydrogen outlet respectively.

4. The SOEC hydrogen generation device based on a multi-stack-core module of claim 3, further comprising an electric steam heater, wherein the hydrogen-containing mixed steam outputted by the mixer is heated by the electric steam heater and then supplied to the hydrogen-containing mixed steam module inlet of the first SOEC module and a nozzle inlet of the ejector.

5. The SOEC hydrogen generation device based on a multi-stack-core module of claim 3, wherein four SOEC modules including one first SOEC module and three second SOEC modules are provided.

6. The SOEC hydrogen generation device based on a multi-stack-core module of claim 1 or 2, further comprising:
a first heat exchanger configured for heat exchange between the steam generated by the steam generator and the crude hydrogen discharged by the SOEC module; and/or
a second heat exchanger configured for heat exchange between the cathode-protection hydrogen and the crude hydrogen discharged by the SOEC module before the cathode-protection hydrogen is introduced into the mixer; and/or
a third heat exchanger configured for heat exchange between the air and the oxygen-rich air discharged by the SOEC module before the air is introduced into the air heater.

7. The SOEC hydrogen generation device based on a multi-stack-core module of claim 6, further comprising a bypass flow path connected in parallel with the first heat exchanger, the second heat exchanger and the third heat exchanger respectively.

8. The SOEC hydrogen generation device based on a multi-stack-core module of any of claims 1 to 7, wherein the plurality of electrolysis cell stack cores are grouped into a plurality of groups, each group comprises a plurality of electrolysis cell stack cores connected in series sequentially, and an oxygen-rich air single-stack outlet of the first electrolysis cell stack core in each group is connected to the hot air single-stack inlet of the follow-up electrolysis cell stack core, and an oxygen-rich air single-stack outlet of the last electrolysis cell stack core in each group is in communication with the oxygen-rich air module outlet through a pipe section.

9. The SOEC hydrogen generation device based on a multi-stack-core module of claim 8, wherein a spare bypass is arranged between the hot air single-stack inlet and the oxygen-rich air single-stack outlet of at least some of the electrolysis cell stack cores.

10. An SOEC module for an SOEC hydrogen generation device, comprising a heat preservation shell and a plurality of electrolysis cell stack cores disposed in the heat preservation shell, wherein the heat preservation shell is provided with a hot air module inlet, a hydrogen-containing mixed steam module inlet, an oxygen-rich air module outlet and a crude hydrogen module outlet; each of the electrolysis cell stack cores comprises a hot air single-stack inlet, a hydrogen-containing mixed steam single-stack inlet, an oxygen-rich air single-stack outlet and a crude hydrogen single-stack outlet; and a plurality of pipe sections connected between the hydrogen-containing mixed steam module inlet and each hydrogen-containing mixed steam single-stack inlet, between the hot air module inlet and the hot air single-stack inlets of at least some of the electrolysis cell stack cores, between the oxygen-rich air module outlet and the oxygen-rich air single-stack outlets of at least some of the electrolysis cell stack cores, and between the crude hydrogen module outlet and each crude hydrogen single-stack outlet are arranged in the heat preservation shell.

11. The SOEC module for an SOEC hydrogen generation device of claim 10, wherein
the plurality of electrolysis cell stack cores are grouped into a plurality of groups, each group comprises a plurality of electrolysis cell stack cores connected in series sequentially, and the oxygen-rich air single-stack outlet of the first electrolysis cell stack core in each group is connected to the hot air single-stack inlet of the follow-up electrolysis cell stack core, and the oxygen-rich air single-stack outlet of the last electrolysis cell stack core in each group is in communication with the oxygen-rich air module outlet through a pipe section.

12. The SOEC module for an SOEC hydrogen generation device of claim 10 or 11, wherein
a spare bypass is arranged between the hot air single-stack inlet and the oxygen-rich air single-stack outlet of the electrolysis cell stack core.
